# FASCICULE DE BREVET EUROPEEN

(11) **EP 2 535 603 B1**
(45) Date de publication et mention de la délivrance du brevet: **30.03.2016**
(21) Numéro de dépôt: 12170776.4
(22) Date de dépôt: 05.06.2012
(51) Int. Cl.: F16B 45/02

(54) **Mousqueton de sécurité**
Sicherheitskarabiner
Locking carabiner

(30) Priorité: 16.06.2011 FR 1155268
(43) Date de publication de la demande: 19.12.2012
(73) Titulaire: Wichard, 63300 Thiers (FR)
(72) Inventeur: Tardif, Sébastien, 44600 Saint Nazaire (FR)
(74) Mandataire: Verriest, Philippe

(56) Documents cités:
- GB-A- 2 441 142
- US-A1- 2010 325 848
- US-B1- 7 228 600

## Description

La présente invention concerne un mousqueton de sécurité utilisé, entre autres, pour la pratique de l'escalade, de la spéléologie et des sports nautiques, tels que la voile, ou encore dans le domaine de la sécurité contre les chutes de personnes intervenant en hauteur.

Le document WO 97/11281 divulgue un mousqueton de sécurité comprenant :
- un corps comportant une portion centrale prolongée à ses extrémités respectivement par une première branche en forme de crochet munie d'une partie de retenue et une deuxième branche, et
- un doigt de fermeture monté pivotant sur la deuxième branche du corps autour d'un axe de pivotement, entre une position de fermeture dans laquelle le doigt de fermeture coopère avec la partie de retenue et une position d'ouverture dans laquelle le doigt de fermeture est basculé vers l'intérieur du mousqueton de manière à permettre l'accrochage du mousqueton sur une ligne de vie, qui peut être formée par exemple par une sangle ou un cordage, ou tout autre point d'ancrage.

Le mousqueton de sécurité décrit dans le document WO 97/11281 ne permet pas, du fait de la forme de la partie de retenue, un accrochage aisé d'une ligne de vie de petite taille, telle qu'une sangle d'environ 3 mm d'épaisseur ou un câble ou cordage de 6 mm de diamètre, tendue sur ou le long d'une surface plane, ce qui peut être préjudiciable, notamment lors de la pratique de sports nautiques.

En effet, un tel mousqueton de sécurité nécessite l'utilisation. d'une main pour saisir la ligne de vie et l'écarter de la surface plane, et de l'autre main pour actionner le doigt de fermeture du mousqueton et accrocher la ligne de vie.

Le document GB 2 441 142 divulgue un mousqueton de sécurité selon le préambule de la revendication 1.

La présente invention vise à remédier à ces inconvénients.

Le problème technique à la base de l'invention consiste donc à fournir un mousqueton de sécurité qui soit de structure simple et économique, et qui permette un accrochage aisé et rapide d'une sangle, d'un cordage, d'un câble ou similaire de petite taille tendu(e) le long d'une surface plane.

A cet effet, la présente invention concerne un mousqueton de sécurité selon la revendication 1.

Une telle forme de la partie de retenue, et plus particulièrement de la portion d'extrémité de cette dernière, permet d'accrocher une ligne de vie de petite taille tendue sur ou le long d'une surface plane, sans nécessiter la prise en main de la ligne de vie pour l'écarter de ladite surface plane. En particulier, la forme latérale de la portion d'extrémité permet de faciliter l'accrochage d'une ligne de vie tendue le long d'une surface plane en inclinant latéralement le corps du mousqueton par rapport à la surface plane.

Ainsi, le mousqueton de sécurité selon l'invention assure un accrochage aisé et rapide de la ligne de vie à l'aide d'une seule main.

Il convient de noter que la deuxième branche pourrait être en contact avec le support plan directement ou indirectement par l'intermédiaire de la portion du doigt de fermeture montée sur cette dernière.

Selon un mode de réalisation de l'invention, la partie de retenue est conformée de telle sorte que l'extrémité libre de la portion d'extrémité est située à une première distance dudit support plan inférieure ou égale à 3 mm, lorsque le mousqueton s'étend transversalement à un support plan, et de préférence sensiblement perpendiculairement audit support plan, la première branche du mousqueton est en appui sur ledit support plan et la deuxième branche est située à une deuxième distance dudit support plan, et ce pour au moins une valeur de la deuxième distance supérieure à 10 mm, de préférence supérieure à 20 mm, et avantageusement supérieure 30 mm.

De façon avantageuse, l'extrémité libre de la portion d'extrémité est dirigée vers l'extérieur du mousqueton.

Selon un mode de réalisation de l'invention, la portion d'extrémité de la partie de retenue est délimitée intérieurement et extérieurement au moins en partie respectivement par une surface intérieure sensiblement plane et une surface extérieure sensiblement plane convergeant l'une vers l'autre.

De façon avantageuse, les surfaces intérieure et extérieure sensiblement planes s'étendent sensiblement parallèlement à l'axe de pivotement.

Avantageusement, les surfaces intérieure et extérieure sensiblement planes forment un angle inférieur ou égal à 90°, préférentiellement compris entre 10 et 80°, de préférence compris entre 20 et 70°, et avantageusement compris entre 30 et 60°.

Selon un mode de réalisation de l'invention, lorsque le mousqueton s'étend sensiblement perpendiculairement à un support plan et les première et deuxième branches du corps sont en position d'appui sur ledit support plan, la surface extérieure sensiblement plane et le support plan forment un angle inférieur ou égal à 90°, de préférence compris entre 10 et 80°, préférentiellement compris entre 20 et 70°, et avantageusement compris entre 30 et 60°.

De façon avantageuse, les surfaces intérieure et extérieure sensiblement planes sont reliées l'une à l'autre par une portion intermédiaire arrondie.

Préférentiellement, la portion intermédiaire arrondie est délimitée extérieurement par une portion de surface sensiblement cylindrique s'étendant sensiblement parallèlement à l'axe de pivotement. La portion de surface sensiblement cylindrique présente de préférence un rayon de courbure inférieur ou égal à 3 mm, et par exemple inférieur ou égal à 2 mm.

Selon un mode de réalisation de l'invention, les deux surfaces latérales sensiblement planes forment un angle inférieur ou égal à 120°, de préférence compris entre 30 et 90°, et par exemple d'environ 60°.

Selon un mode de réalisation de l'invention, la partie de retenue présente, vue de face, sensiblement une forme en T, et l'extrémité libre du doigt de pivotement présente un logement sensiblement de forme complémentaire de celle de la partie de retenue et destiné à recevoir cette dernière.

Avantageusement, le doigt de fermeture comporte au moins une portion faisant saillie dans le logement destiné à recevoir la partie de retenue et destinée à coopérer avec une surface de retenue ménagée sur la partie de retenue, ladite au moins une portion étant agencée pour mater la surface de retenue lorsque la charge exercée sur le mousqueton dépasse une valeur prédéterminée.

Selon une alternative de réalisation de l'invention, l'une des parois délimitant le logement destiné à recevoir la partie de retenue est agencée pour coopérer avec une surface de retenue ménagée sur la partie de retenue de manière à mater la surface de retenue lorsque la charge exercée sur le mousqueton dépasse une valeur prédéterminée.

De toute façon, l'invention sera bien comprise à l'aide de la description qui suit en référence au dessin schématique annexé représentant, à titre d'exemples non limitatifs, plusieurs formes d'exécution de ce mousqueton de sécurité.
Figure 1 est une vue en perspective du mousqueton de sécurité selon un premier mode de réalisation de l'invention montrant le doigt de fermeture en position de fermeture.
Figure 2 est une vue en perspective du mousqueton de sécurité de la figure 1 montrant le doigt de fermeture en position d'ouverture.
Figure 3 est une vue en perspective et en coupe partielle du mousqueton de sécurité de la figure 1 montrant le doigt de fermeture en position de fermeture.
Figure 4 est une vue en perspective et en coupe partielle du mousqueton de sécurité de la figure montrant les moyens de verrouillage en position de déverrouillage.
Figure 5 est une vue, à l'échelle agrandie, d'un détail de la figure 3.
Figure 6 est une vue en perspective et en coupe selon la ligne VI-VI de la figure 5.
Figure 7 est une vue en perspective et en coupe montrant l'axe d'articulation en position de démontage.
Figure 8 est une vue en perspective du mousqueton de la figure 1 dans laquelle l'organe de manipulation a été retiré.
Figure 9 est une vue en perspective de l'organe de manipulation du mousqueton de la figure 1.
Figures 10 et 11 sont des vues en perspectives d'une extrémité du corps du mousqueton de la figure 1.
Figure 12 est une vue en perspective de l'extrémité libre du doigt de fermeture du mousqueton de la figure 1.
Figure 13 est une vue de côtés du mousqueton de la figure 1 avec les première et deuxième branches du corps en appui sur un support plan.
Figure 14 est une vue de côtés du mousqueton de la figure 1 avec I première branche du corps en appui sur un support plan et la deuxième branche décalé par rapport au support plan.
Figure 15 est une vue schématique de côté d'un mousqueton de sécurité selon un deuxième mode de réalisation de l'invention.
Figure 16 est une vue schématique de côté d'un mousqueton de sécurité selon un troisième mode de réalisation de l'invention.

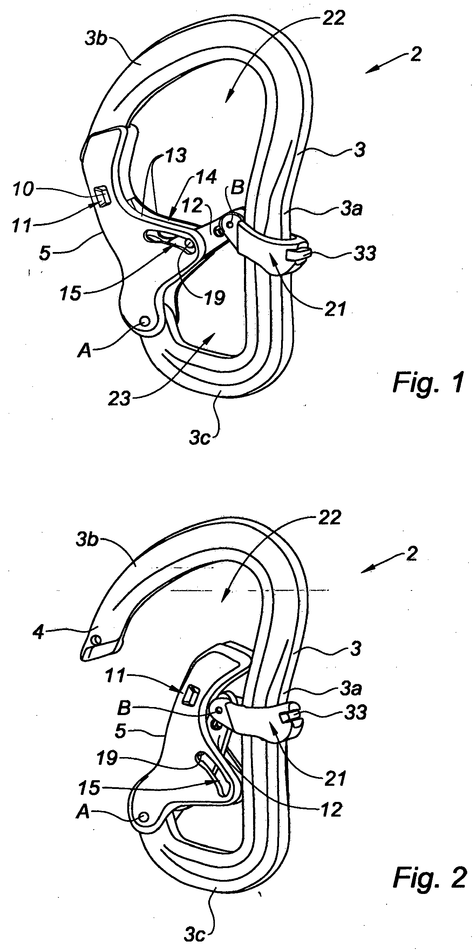

Les figures 1 à 14 représentent un mousqueton de sécurité 2 utilisable, entre autres, pour la pratique de l'escalade, de la spéléologie et des sports nautiques, tels que la voile, ou encore dans le domaine de la sécurité contre les chutes de personnes intervenant en hauteur.

Le mousqueton de sécurité 2 comporte un corps 3 en forme générale de C. Le corps 3 comporte une portion centrale sensiblement rectiligne 3a prolongée à ses extrémités respectivement par une première branche en forme de crochet 3b et une deuxième branche cintrée 3c. La première branche en forme de crochet 3b comporte, à son extrémité libre, une partie de retenue 4.

Le mousqueton de sécurité 2 comporte en outre un doigt de fermeture 5 monté pivotant autour d'un axe de pivotement A situé au niveau de l'extrémité libre de la deuxième branche cintrée 3c, entre une position de fermeture dans laquelle le doigt de fermeture 5 coopère avec la partie de retenue 4 de la première branche en forme de crochet 3b et une position d'ouverture dans laquelle le doigt de fermeture 5 est basculé vers l'intérieur du mousqueton.

Le mousqueton de sécurité 2 comporte également des moyens de verrouillage montés mobiles sur le doigt de fermeture 5 entre une position de verrouillage dans laquelle les moyens de verrouillage coopèrent avec la première branche en forme de crochet 3b, et plus particulièrement avec la partie de retenue 4, de manière à verrouiller le doigt de fermeture 5 dans sa position de fermeture, et une position de déverrouillage dans laquelle le doigt de fermeture 5 est déplaçable vers sa position d'ouverture.

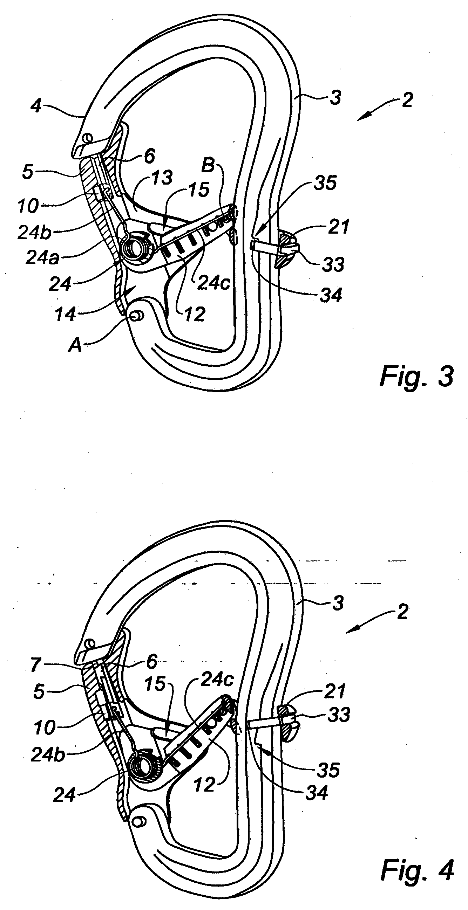

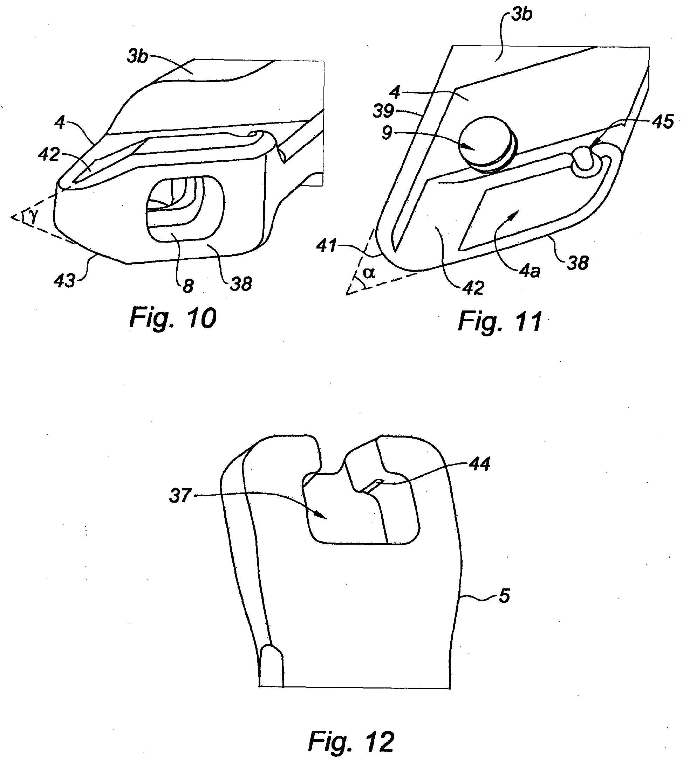

Comme montré plus particulièrement sur les figures 3 et 4, les moyens de verrouillage comportent un doigt de verrouillage 6 monté mobile dans un logement 7 ménagé dans le doigt de fermeture 5 et débouchant dans l'extrémité libre du doigt de fermeture 5. Le doigt de verrouillage 6 est agencé pour coopérer, en position de verrouillage, avec un premier orifice 8 (représenté sur la figure 10) ménagé dans la partie de retenue 4.

La portion en forme de crochet 3b présente avantageusement un deuxième orifice traversant 9 débouchant dans le premier orifice 8 de manière à éviter une accumulation de saletés à l'intérieur du premier orifice 8, et donc tout risque de blocage non souhaité du doigt de verrouillage 6.

Le mousqueton de sécurité 2 comprend de plus un témoin de verrouillage 10, avantageusement de couleur vive, solidaire du doigt de verrouillage 6 et prévu pour signaler un état de verrouillage du doigt de fermeture 5.

De préférence, le doigt de fermeture 5 comprend une fenêtre 11, et le témoin de verrouillage 10 est mobile entre une première position dans laquelle il est visible à travers la fenêtre 11 et indique un état de verrouillage du doigt de fermeture 5, et une deuxième position dans laquelle il est décalé par rapport à la fenêtre 11, et donc non visible, et indique un état de déverrouillage du doigt de fermeture 5.

Le mousqueton de sécurité 2 comprend en outre des moyens d'actionnement agencés pour déplacer les moyens de verrouillage entre leurs positions de verrouillage et de déverrouillage.

Les moyens d'actionnement comportent un organe d'actionnement 12 relié au doigt de verrouillage 6 et monté mobile sur le doigt de fermeture 5 entre au moins une première position (représentée sur les figures 1 et 3) dans laquelle le doigt de verrouillage 6 est en position de verrouillage, et une deuxième position (représentée sur les figures 2 et 4) dans laquelle le doigt de verrouillage 6 est en position de déverrouillage.

L'organe d'actionnement 12 est conformé de manière à prendre appui contre une partie de la portion centrale 3a tournée vers l'intérieur du mousqueton, lorsqu'il se trouve dans sa première position.

Le doigt de fermeture 5 comprend avantageusement deux ailes latérales 13 sensiblement parallèles délimitant un logement 14 dans lequel s'étend au moins partiellement l'organe d'actionnement 12. Chaque aile latérale 13 du doigt de fermeture 5 comporte une lumière 15 sensiblement en arc de cercle 16 centrée sur l'axe de pivotement A du doigt de fermeture 5.

L'organe d'actionnement 12 comporte une première et une deuxième surfaces 17, 18 sensiblement planes opposées l'une par rapport à l'autre, et un premier et un deuxième ergots 19 (seul un ergot est visible sur les figures) ménagés respectivement sur les première et deuxième surfaces planes 17, 18 et montés respectivement coulissants dans les lumières 15 correspondantes. Les premier et deuxième ergots 19 sont coaxiaux et s'étendent sensiblement parallèlement à l'axe de pivotement A du doigt de fermeture 5.

Les moyens d'actionnement comprennent également un organe de manipulation 21 monté mobile sur la portion centrale 3a du corps du mousqueton, entre une première position (représentée sur les figures 1 et 3) et une deuxième position (représentée sur les figures 2 et 4), et sur lequel est monté articulé l'organe d'actionnement 12 autour d'un axe d'articulation B sensiblement parallèlement à l'axe de pivotement A du doigt de fermeture 5.

L'organe de manipulation 21 comprend une première portion 21a en forme d'étrier montée mobile autour de la portion centrale 3a du corps du mousqueton, et une partie de montage 21 b située à l'intérieur du mousqueton et comportant deux pattes 21c sensiblement parallèles et solidaires de la partie de manipulation 21a. La partie de montage 21b forme une chape portant l'axe d'articulation B.

Les organes de manipulation et d'actionnement 21, 12 sont agencés de telle sorte qu'un déplacement de l'organe de manipulation, 21 entre ses première et deuxième positions entraîne un déplacement de l'organe d'actionnement 12 entre ses première et deuxième positions, et de telle sorte qu'un déplacement de l'organe d'actionnement 12 entre ses première et deuxième positions entraîne un déplacement du doigt de verrouillage 6 entre ses positions de verrouillage et de déverrouillage.

Plus particulièrement, le déplacement de l'organe de manipulation 21 vers sa deuxième position provoque un éloignement de l'axe d'articulation B de la portion centrale 3a, et ainsi un pivotement de l'organe d'actionnement 12 par rapport au doigt de fermeture 5, autour de ses ergots 19.

Le corps 3, les organes d'actionnement et de manipulation 12, 21 et le doigt de fermeture 5 délimitent un premier passant 22, accessible après déplacement du doigt de fermeture 5 vers sa position d'ouverture, destiné à recevoir un cordage ou un point d'ancrage, et un deuxième passant 23, séparé du premier passant 22 par les organes de manipulation et d'actionnement, destiné à recevoir une longe.

Le mousqueton de sécurité comprend également un ressort de torsion 24 monté sur l'organe d'actionnement 12 et agencé d'une part pour solliciter le doigt de fermeture 5 vers sa position de fermeture, et d'autre part pour solliciter l'organe d'actionnement 12 vers sa première position.

Le ressort de torsion 24 est constitué par un fil métallique enroulé sur lui-même pour former une boucle centrale 24a montée dans un logement complémentaire délimité par l'organe d'actionnement 12, la boucle centrale 24a se prolongeant par une première branche 24b agencée pour solliciter le doigt de fermeture 5 vers sa position de fermeture et dont l'extrémité libre est montée sur le doigt de verrouillage 6, et par une deuxième branche 24c agencée pour solliciter l'organe d'actionnement 12 vers sa première position.

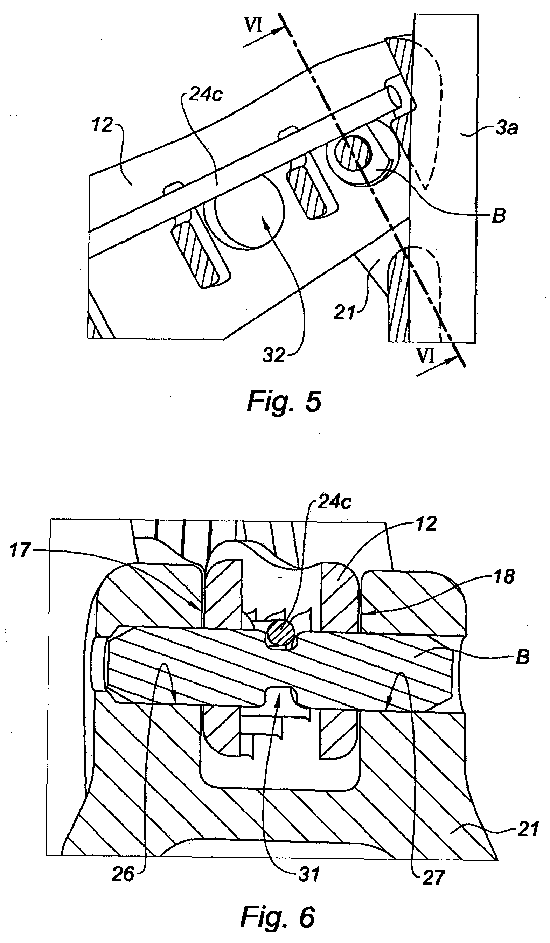

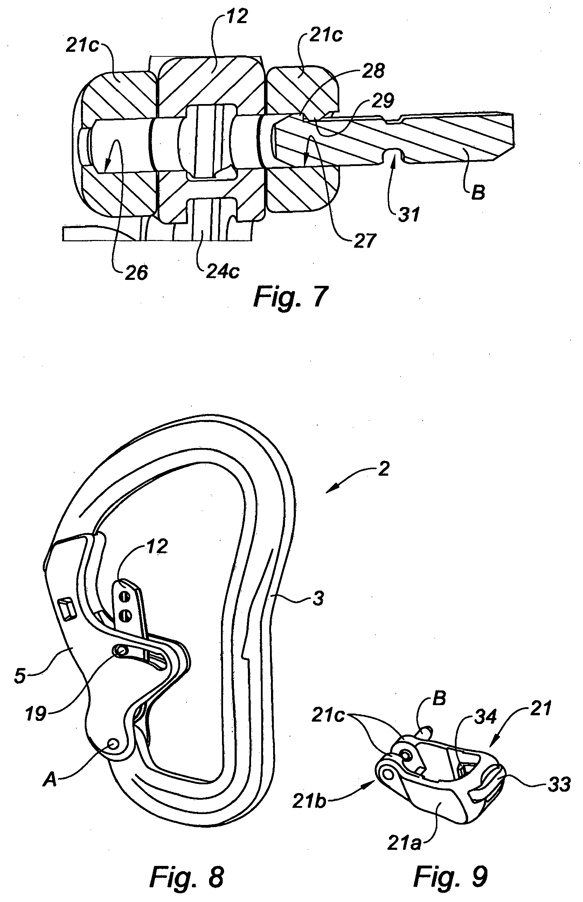

L'axe d'articulation B est monté de manière imperdable sur l'organe d'actionnement 12, et est déplaçable axialement entre une position de fonctionnement (montrée sur la figure 6) dans laquelle il s'étend à travers les organes d'actionnement et de manipulation 12, 21, et une position de démontage (montrée sur la figure 7) dans laquelle il ne s'étend pas à travers l'organe d'actionnement 12 et autorise un démontage des organes de manipulation et d'actionnement 12, 21.

Comme montré sur les figures 6 et 7, chaque patte 21c de la partie de montage 21b comporte un oeillet 26, 27 destiné à recevoir l'axe d'articulation B, l'oeillet 26 comportant une portion présentant une section inférieure à la section maximale de l'axe d'articulation B de manière à empêcher son retrait par cet oeillet, et l'oeillet 27 étant conformé pour autoriser un retrait partiel de l'axe d'articulation B à travers cet oeillet.

Le montage imperdable de l'axe d'articulation B est assuré en prévoyant notamment un épaulement 28 sur l'axe d'articulation B à proximité de l'une de ses extrémités, et un ergot 29 faisant saillie dans l'oeillet 27 et agencé pour coopérer avec l'épaulement 28.

Afin d'immobiliser l'axe d'articulation B dans sa position de fonctionnement, ce dernier comporte une gorge périphérique 31 dans le fond de laquelle prend appui la deuxième branche 24c du ressort de torsion 24.

L'organe d'actionnement 12 comporte avantageusement une lumière 32 débouchant au niveau de la deuxième branche 24c du ressort de torsion 24. La lumière 32 est agencée pour permettre le passage d'un outil destiné à déplacer la deuxième branche 24c du ressort de torsion 24 à l'extérieur de la gorge périphérique 31 afin de permettre un déplacement de l'axe d'articulation B entre ses positions de fonctionnement et de démontage.

Le mousqueton de sécurité 2 comprend des moyens de blocage mobiles entre une position de blocage de l'organe de manipulation 21 dans sa première position, et une position de déblocage de l'organe de manipulation 21 autorisant un déplacement de ce dernier vers sa deuxième position.

Les moyens de blocage comportent un bouton de commande 33 en forme générale de U dont au moins l'une des branches, et de préférence chaque branche, est équipé d'un doigt de blocage 34. Le bouton de commande 33 est monté mobile sur l'organe de manipulation 21 entre une position de blocage (montrée sur la figure 3) dans laquelle le ou chaque doigt de blocage 34 est agencé pour coopérer avec une butée 35 ménagée sur la portion centrale 3a du corps de manière à empêcher un déplacement de l'organe de manipulation 21 vers sa deuxième position, et une position de déblocage (montrée sur la figure 4) dans laquelle chaque doigt de blocage 34 est décalé par rapport à la butée correspondante 35 de manière à autoriser un déplacement de l'organe de manipulation 21 vers sa deuxième position.

Selon un mode de réalisation, le bouton de commande comporte une portion élastiquement déformable agencée de manière à favoriser un retour de ce dernier vers sa position de blocage.

Comme montré sur les figures 10 et 11, la partie de retenue 4 comporte une portion d'extrémité 4a effilée et dirigée vers l'extérieur du mousqueton. La portion d'extrémité 4a présente, vue de côté, une forme générale de pointe. En outre, la partie de retenue 4 présente, vue de face, sensiblement une forme en T. Comme montré sur la figure 12, l'extrémité libre du doigt de fermeture 5 présente un logement 37 sensiblement de forme complémentaire de celle de la partie de retenue 4 et destiné à recevoir cette dernière. Ces dispositions permettent notamment de renforcer la résistance à la rupture du mousqueton.

La portion d'extrémité de la partie de retenue 4 est délimitée intérieurement et extérieurement respectivement par une première et une deuxième surfaces sensiblement planes 38, 39 convergeant l'une vers l'autre et s'étendant sensiblement parallèlement à l'axe de pivotement A.

Les première et deuxième surfaces sensiblement planes 38, 39 forment un angle α inférieur ou égal à 90°, et de préférence compris entre 20 et 70° et avantageusement compris entre 30 et 60°.

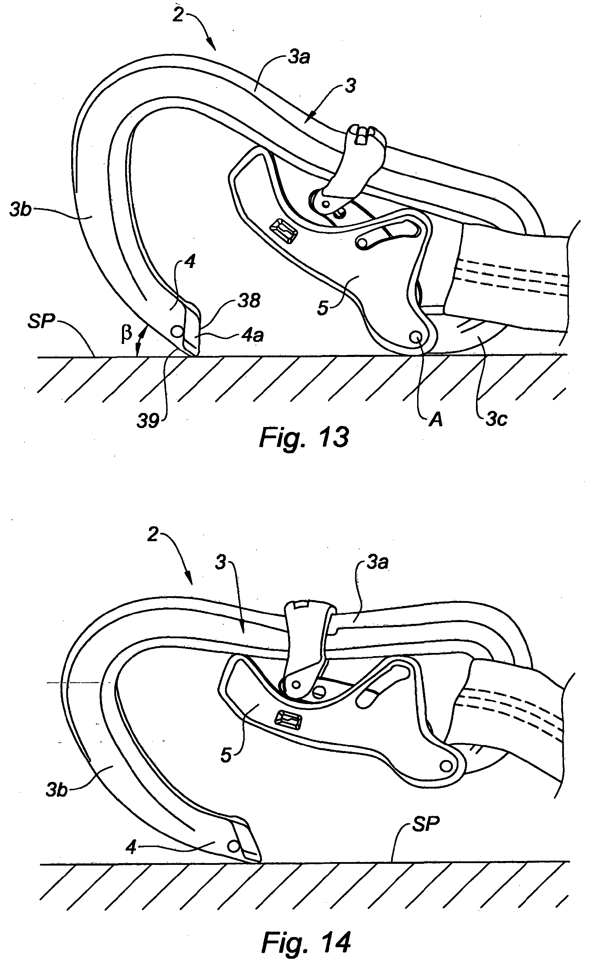

Comme montré sur la figure 13, lorsque le mousqueton de sécurité s'étend sensiblement perpendiculairement à un support plan SP et les première et deuxième branches 3b, 3c du corps sur en appui le support plan, la deuxième surface sensiblement plane 39 et le support plan forment un angle β inférieur ou égal à 90°, et de préférence compris entre 10 et 80° et avantageusement compris entre 30 et 60°.

Les première et deuxième surfaces sensiblement planes 38, 39 sont reliées l'une à l'autre par une portion intermédiaire arrondie 41. La portion intermédiaire arrondie 41 est délimitée extérieurement par une portion de surface cylindrique s'étendant sensiblement parallèlement à l'axe de pivotement A et présentant un rayon de courbure inférieur ou égal à 3 mm, et par exemple d'environ 2 mm.

La portion d'extrémité 4a de la partie de retenue 4 est délimitée latéralement par au moins une troisième et une quatrième surfaces sensiblement planes 42, 43 convergeant vers l'extrémité libre de la portion d'extrémité 4a. Les troisième et quatrième surfaces sensiblement planes 42, 43 forment un angle γ inférieur ou égal à_120°, et de préférence compris entre 30 et 90°. Ces dispositions permettent de faciliter l'accrochage d'une ligne de vie tendue le long d'une surface plane en inclinant latéralement le corps du mousqueton par rapport à la surface plane.

Il doit être noté que la partie de retenue 4 est conformée de telle sorte qu'en position d'appui des première et deuxième branches du corps sur un support plan, l'extrémité libre de la portion d'extrémité 4a, à savoir la pointe de cette dernière, forme la zone d'appui de la première branche 3b sur le support plan.

Le doigt de fermeture 5 comporte avantageusement une nervure 44 faisant saillie dans le logement 37, et la partie de retenue 4 comporte une surface de retenue 45 destinée à coopérer avec la nervure 44. La nervure 44 est agencée pour mater la surface de retenue 45 lorsque la charge exercée sur le mousqueton dépasse une valeur prédéterminée.

Le procédé de fixation du mousqueton 2 sur un point d'ancrage va maintenant être décrit.

Le procédé de fixation comporte les étapes consistant à :
- exercer une pression sur le bouton de commande 33 de manière à le déplacer vers sa position de déblocage,
- déplacer l'organe de manipulation 21 vers sa deuxième position afin d'entraîner le déplacement de l'organe d'actionnement 12 vers sa deuxième position et le déplacement du doigt de verrouillage 6 vers sa position de déverrouillage,
- exercer une pression sur le doigt de fermeture 5 de manière à le déplacer vers sa position d'ouverture,
- engager la portion en forme de crochet 3b à l'intérieur du point d'ancrage,
- cesser d'exercer la pression sur le doigt de fermeture 5.

Lorsque l'utilisateur cesse d'exercer une pression sur le doigt de fermeture 5, les première et deuxième branches du ressort de torsion 24 sollicitent respectivement le doigt de fermeture 5 vers sa position de fermeture et l'organe d'actionnement 12 vers sa première position. Il en résulte un verrouillage du doigt de fermeture 5 par rapport au corps et un déplacement de l'organe de manipulation 21 vers sa première position.

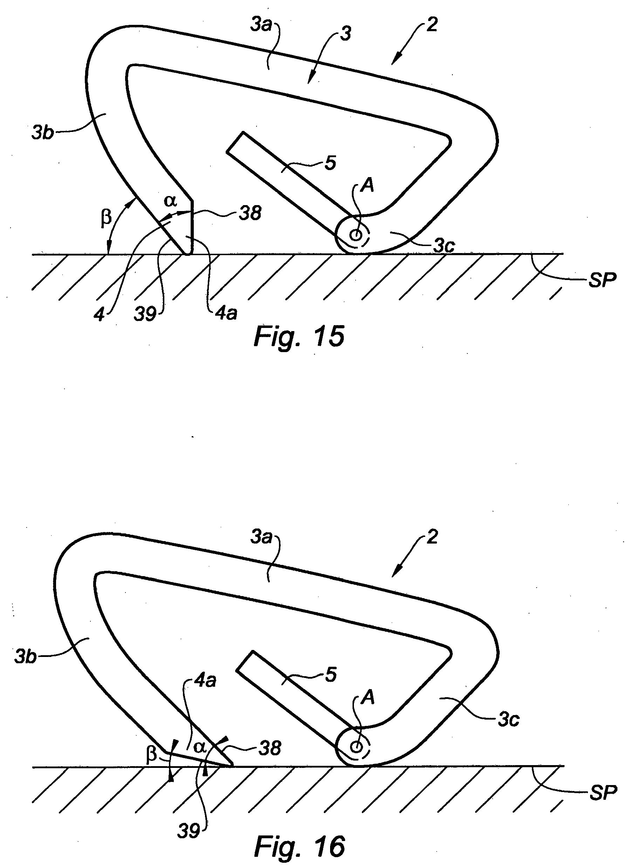

La figure 15 représente un deuxième mode de réalisation du mousqueton de sécurité 2 qui diffère de celui montré sur les figures 1 à 14 essentiellement en ce qu'il ne comporte pas de moyens de verrouillage et d'actionnement.

La figure 16 représente un troisième mode de réalisation du mousqueton de sécurité 2 qui diffère de celui montré sur la figure 15 essentiellement en ce que l'angle β est inférieur à 20°.

Comme il va de soi, l'invention ne se limite pas aux seules formes d'exécution de ce mousqueton de sécurité, décrites ci-dessus à titre d'exemples, elle en embrasse au contraire toutes les variantes de réalisation.

## Revendications

1. Mousqueton de sécurité (2), comprenant :
- un corps (3) comportant une portion centrale (3a) prolongée à ses extrémités respectivement par une première branche (3b) en forme de crochet et une deuxième branche (3c), la première branche (3b) comprenant une partie de retenue (4) comportant une portion d'extrémité (4a) effilée, la portion d'extrémité (4a) effilée présentant, vue de côté, une forme générale de pointe,
- un doigt de fermeture (5) monté pivotant sur la deuxième branche (3c) du corps autour d'un axe de pivotement (A), entre une position de fermeture dans laquelle le doigt de fermeture (5) coopère avec la partie de retenue (4) et une position d'ouverture dans laquelle le doigt de fermeture est basculé vers l'intérieur du mousqueton,
la partie de retenue (4) étant conformée de telle sorte que, lorsque le mousqueton s'étend transversalement à un support plan, et de préférence sensiblement perpendiculairement audit support plan, et les première et deuxième branches (3b, 3c) du corps sont en position d'appui sur ledit support plan, l'extrémité libre de la portion d'extrémité (4a) forme la zone d'appui de la première branche sur ledit support plan,
**caractérisé en ce que** la portion d'extrémité (4a) de la partie de retenue (4) est délimitée latéralement par au moins deux surfaces latérales sensiblement planes (42, 43) convergeant vers l'extrémité libre de la portion d'extrémité (4a).

2. Mousqueton de sécurité selon la revendication 1, dans lequel la partie de retenue (4) est conformée de telle sorte que l'extrémité libre de la portion d'extrémité (4a) est située à une première distance dudit support plan inférieure ou égale à 3 mm, lorsque le mousqueton s'étend transversalement à un support plan (Sp), et de préférence sensiblement perpendiculairement audit support plan, la première branche (3b) du mousqueton est en appui sur ledit support plan et la deuxième branche (3c) est située à une deuxième distance dudit support plan, et ce pour au moins une valeur de la deuxième distance supérieure à 10 mm, de préférence supérieure à 20 mm, et avantageusement supérieure 30 mm.

3. Mousqueton de sécurité selon la revendication 1 ou 2, dans lequel l'extrémité libre de la portion d'extrémité (4a) est dirigée vers l'extérieur du mousqueton.

4. Mousqueton de sécurité selon l'une des revendications 1 à 3, dans lequel la portion d'extrémité (4a) de la partie de retenue (4) est délimitée intérieurement et extérieurement au moins en partie respectivement par une surface intérieure sensiblement plane (38) et une surface extérieure sensiblement plane (39) convergeant l'une vers l'autre.

5. Mousqueton de sécurité selon la revendication 4, dans lequel les surfaces intérieure et extérieure sensiblement planes (38, 39) forment un angle (α) inférieur ou égal à 90°, et de préférence compris entre 10 et 80°.

6. Mousqueton de sécurité selon la revendication 4 ou 5, dans lequel, lorsque le mousqueton s'étend sensiblement perpendiculairement à un support plan et les première et deuxième branches (3b, 3c) du corps sont en position d'appui sur ledit support plan, la surface extérieure sensiblement plane (39) et ledit support plan forment un angle (β) inférieur ou égal à 90°, et de préférence compris entre 10 et 80°.

7. Mousqueton de sécurité selon l'une des revendications 4 à 6, dans lequel les surfaces intérieure et extérieure sensiblement planes (38, 39) sont reliées l'une à l'autre par une portion intermédiaire arrondie (41).

8. Mousqueton de sécurité selon la revendication 7, dans lequel la portion intermédiaire arrondie (41) est délimitée extérieurement par une portion de surface sensiblement cylindrique s'étendant sensiblement parallèlement à l'axe de pivotement (A).

9. Mousqueton de sécurité selon la revendication 8, dans lequel la portion de surface sensiblement cylindrique présente un rayon de courbure inférieur ou égal à 3 mm.

10. Mousqueton de sécurité selon l'une des revendications 1 à 9, dans lequel les deux surfaces latérales sensiblement planes (42, 43) forment un angle (γ) inférieur ou égal à 120°.

## Patentansprüche

1. Sicherheitskarabiner (2), folgendes umfassend:
- einen Korpus (3), einen mittleren Abschnitt (3a) umfassend, der sich an seinen jeweiligen Enden jeweils durch einen ersten Schenkel (3b) in Form eines Hakens und einen zweiten Schenkel (3c) fortsetzt, wobei der erste Schenkel (3b) einen Rückhalteabschnitt (4) umfasst, der einen schmalen Endabschnitt (4a) umfasst, wobei der schmale Endabschnitt (4a) von der Seite gesehen eine allgemein spitze Form aufweist,
- einen Schnapper (5), der auf dem zweiten Schenkel (3c) des Korpus um eine Schwenkachse (A) zwischen einer Schließposition, in der der Schnapper (5) mit dem Rückhalteabschnitt (4) zusammenwirkt, und einer Öffnungsposition schwenkbar angebracht ist, in der der Schnapper ins Innere des Karabiners geschwenkt wird,
wobei der Rückhalteabschnitt (4) derart ausgeformt ist, dass das freie Ende des Endabschnitts (4a), wenn sich der Karabiner quer zu einer flachen Unterlage, und vorzugsweise in etwa senkrecht zur besagten flachen Unterlage erstreckt, und sich der erste und der zweite Schenkel (3b, 3c) des Korpus in der Anlageposition auf der besagten flachen Unterlage befinden, den Auflagebereich des ersten Schenkels auf der besagten flachen Unterlage bildet,
**dadurch gekennzeichnet, dass** der Endabschnitt (4a) des Rückhalteabschnitts (4) seitlich durch zumindest zwei in etwa ebene Seitenflächen (42, 43) eingegrenzt wird, die zum freien Ende des Endabschnitts (4a) hin zusammenlaufen.

2. Sicherheitskarabiner nach Anspruch 1, wobei der Rückhalteabschnitt (4) derart ausgeformt ist, dass sich das freie Ende des Endabschnitts (4a) in einem ersten Abstand von der besagten flachen Unterlage kleiner oder gleich 3 mm befindet, wenn sich der Karabiner quer zu einer flachen Unterlage (Sp), und vorzugsweise in etwa senkrecht zur besagten flachen Unterlage erstreckt, der erste Schenkel (3b) des Karabiners auf der besagten flachen Unterlage aufliegt, und sich der zweite Schenkel (3c) in einem zweiten Abstand von der besagten flachen Unterlage befindet, und dies bei zumindest einem Wert für den zweiten Abstand von mehr als 10 mm, vorzugsweise von mehr als 20 mm und vorteilshalber mehr als 30 mm.

3. Sicherheitskarabiner nach Anspruch 1 oder 2, wobei das freie Ende des Endabschnitts (4a) zur Außenseite des Karabiners gerichtet ist.

4. Sicherheitskarabiner nach einem der Ansprüche 1 bis 3, wobei der Endabschnitt (4a) des Rückhalteabschnitts (4) innen und außen zumindest teilweise jeweils durch eine in etwa ebene Innenfläche (38) und eine in etwa ebene Außenfläche (39) eingegrenzt wird, die zueinander zusammenlaufen.

5. Sicherheitskarabiner nach Anspruch 4, wobei die in etwa ebenen Innen- und Außenflächen (38, 39) einen Winkel (α) kleiner oder gleich 90°, und vorzugsweise zwischen 10 und 80° bilden.

6. Sicherheitskarabiner nach Anspruch 4 oder 5, wobei die in etwa ebene Außenfläche (39) und die besagte flache Unterlage, wenn sich der Karabiner in etwa senkrecht zu einer flachen Unterlage erstreckt, und sich die beiden Schenkel (3b, 3c) des Korpus in der Auflageposition auf der besagten flachen Unterlage befinden, einen Winkel (β) kleiner oder gleich 90°, und vorzugsweise zwischen 10 und 80° bilden.

7. Sicherheitskarabiner nach einem der Ansprüche 4 bis 6, wobei die in etwa ebenen Innen- und Außenflächen (38, 39) durch einen abgerundeten Zwischenabschnitt (41) miteinander verbunden sind.

8. Sicherheitskarabiner nach Anspruch 7, wobei der abgerundete Zwischenabschnitt (41) außen durch einen in etwa zylindrischen Oberflächenabschnitt eingegrenzt wird, der sich in etwa parallel zur Schenkachse (A) erstreckt.

9. Sicherheitskarabiner nach Anspruch 8, wobei der in etwa zylindrische Oberflächenabschnitt einen Biegeradius kleiner oder gleich 3 mm aufweist.

10. Sicherheitskarabiner nach einem der Ansprüche 1 bis 9, wobei die beiden in etwa ebenen Seitenflächen (42, 43) einen Winkel (Y) kleiner oder gleich 120° bilden.

## Claims

1. A safety carabiner (2), comprising:
a body (3) comprising a central portion (3a) extended at ends thereof by a first hook-shaped branch (3b) and a second branch (3c), respectively, the first branch (3b) including a retaining portion (4) comprising a slender end portion (4a), the slender end portion (4a) being generally tapered seen from the side,
a closing finger (5) pivotably mounted on the second branch (3c) of the body around a hinge pin (A), between a closed position in which the closing finger (5) cooperates with the retaining portion (4) and an open position in which the closing finger is tilted toward the inside of the carabiner,
the retaining portion being configured so that, when the carabiner extends transverse to a flat support, and preferably substantially perpendicular to said flat support, and the first and second branches (3b, 3c) of the body are in position bearing on said flat support, the free end of the end portion (4a) forms the bearing zone of the first branch on said flat support,
**characterized in that** the end portion (4a) of the retaining portion (4) is laterally delimited by at least two substantially flat side surfaces (42, 43) converging toward the free end of the end portion (4a).

2. The safety carabiner according to claim 1, wherein the retaining portion (4) is configured such that the free end of the end portion (4a) is situated at a first distance from said flat support smaller than or equal to 3 mm, when the carabiner extends transverse to a flat support (Sp), and preferably substantially perpendicular to said flat support, the first branch (3b) of the carabiner is bearing on said flat support and the second branch (3c) is situated at a second distance from said flat support, for at least a value of the second distance greater than 10 mm, preferably greater than 20 mm, and advantageously greater than 30 mm.

3. The safety carabiner according to claim 1 or 2, wherein the free end of the end portion (4a) is oriented toward the outside of the carabiner.

4. The safety carabiner according to any one of claims 1 to 3, wherein the end portion (4a) of the retaining portion (4) is at least partially inwardly and outwardly delimited by a substantially flat inner surface (38) and a substantially flat outer surface (39), respectively, converging toward one another.

5. The safety carabiner according to claim 4, wherein the substantially inner and outer flat surfaces (38, 39) form an angle (α) smaller than or equal to 90°, and preferably between 10 and 80°.

6. The safety carabiner according to claim 4 or 5, wherein, when the carabiner extends substantially perpendicular to a flat support and the first and second branches (38, 39) of the body are in position bearing on the flat support, the substantially flat outer surface (39) and the flat support form an angle smaller than or equal to 90°, and preferably between 10 and 80°.

7. The safety carabiner according to any one of claims 4 to 6, wherein the substantially flat inner and outer surfaces (38, 39) are connected to one another by a rounded intermediate portion (41).

8. The safety carabiner according to claim 7, wherein the rounded intermediate portion (41) is outwardly delimited by a substantially cylindrical surface portion extending substantially parallel to the hinge pin (A).

9. The safety carabiner according to claim 8, wherein the substantially cylindrical surface portion preferably has a curve radius smaller than or equal to 3 mm.

10. The safety carabiner according to any one of claims 1 to 9, wherein the two substantially flat side surfaces (42, 43) form an angle (γ) smaller than or equal to 120°.
